# EUROPEAN PATENT SPECIFICATION

(11) **EP 3 943 179 B1**
(45) Date of publication and mention of the grant of the patent: **13.11.2024**
(21) Application number: 20778493.5
(22) Date of filing: 19.03.2020
(51) Int. Cl.: B01D 61/08, B01D 61/10, B01D 61/02, C02F 1/44, B01D 65/08, C02F 103/08, B01D 63/10

(54) **USE OF A HIGH RECOVERY RATE-REVERSE OSMOSIS SPACER AND ELEMENT**
VERWENDUNG EINES UMKEHROSMOSE-SPACERS UND -ELEMENTS MIT HOHER RÜCKGEWINNUNGSRATE
L'UTILISATION D'UN ESPACEUR ET D'UN ÉLÉMENT D'OSMOSE INVERSE À TAUX DE RÉCUPÉRATION ÉLEVÉ

(30) Priority: 22.03.2019 KR 20190032841
(43) Date of publication of application: 26.01.2022
(73) Proprietor: LG CHEM, LTD., Yeongdeungpo-gu, Seoul 07336 (KR)
(72) Inventor: PARK, Taeyoung, Daejeon 34122 (KR); LEE, Phill, Daejeon 34122 (KR); KIM, Taehyeong, Daejeon 34122 (KR); KANG, Hyelim, Daejeon 34122 (KR); SHEN, Huizi, Daejeon 34122 (KR); LEE, Gahyeon, Daejeon 34122 (KR); KIM, Kiho, Daejeon 34122 (KR)
(74) Representative: Goddar, Heinz J.
(86) International application number: PCT/KR2020/003752
(87) International publication number: WO 2020/197164

(56) References cited:
- EP-A1- 2 864 026
- WO-A1-2018/056090
- KR-A- 20130 018 230
- KR-A- 20150 034 853
- KR-A- 20170 038 646
- KR-A- 20170 112 595
- KR-A- 20170 112 595
- KR-B1- 100 539 332

## Description

### [Technical Field]

This application claims priority to and the benefit of Korean Patent Application No. 10-2019-0032841 filed with the Korean Intellectual Property Office on March 22, 2019.

The present invention relates to the use of a reverse osmosis spacer and a reverse osmosis element with a high recovery rate, and more particularly, to a reverse osmosis spacer and a reverse osmosis element with a high recovery rate, which are capable of increasing a flow rate of produced water and decreasing less a salt removal rate in the reverse osmosis element during an operation at a high recovery rate with a structure of the reverse osmosis spacer that constitutes the reverse osmosis element.

### [Background Art]

Earth is a planet where water occupies 70% of the surface thereof. Seawater accounts for 97.5% of the total amount of water, and the seawater cannot be used as drinking water. Accordingly, a seawater desalination technology has been developed which removes salt dissolved in seawater and converts seawater into fresh water that can be used as drinking water. In the past, a method of producing pure water by boiling seawater and collecting moisture vapor was used. However, recently, a method for producing pure water using a reverse osmosis filter has been used as a core technique for seawater desalination.

Unlike osmosis in which water moves from a site with a low concentration to a site with a high concentration, the reverse osmosis is a phenomenon in which pressure is applied to a high-concentration solution to move water to a low-concentration solution. While coarse salt or contaminants cannot pass through the filter, only water passes through the filter, such that pure and clean water may be obtained. The reverse osmosis is used in various fields for producing sterile water for medical use, purified water, and water for semiconductor manufacturing.

A reverse osmosis element using such a reverse osmosis has been used. The reverse osmosis element is configured by stacking a plurality of reverse osmosis membranes, a plurality of feed spacers, and a plurality of transmissive spacers. The reverse osmosis element surrounds a water collecting pipe. When raw water is supplied to one side of the reverse osmosis element, fine contaminants less than nanometers are filtered out by the reverse osmosis membrane while the raw water flows along the feed spacers, and permeable water is taken out from the other side of the reverse osmosis element. The permeable water filtered by the reverse osmosis membrane flows along the transmissive spacers, flows into holes in the water collecting pipe, and then flows in the water collecting pipe. Therefore, in order to reduce a pressure loss when the raw water flows, the reverse osmosis element has a structure capable of withstanding high pressure. In general, a mesh-shaped spacer is used as the feed spacer, whereby a flow path of the raw water is ensured, a flow of raw water increases, and ion polarization occurring at an interface of the reverse osmosis membrane is mitigated.

Unlike the reverse osmosis elements for industrial (BW) and seawater desalination (SW), the reverse osmosis element for home use in the related art operates at a raw water concentration of 20 ppm, an operating pressure of 50 to 60 psi, and a recovery rate of 15% and has a low flow rate of produced water. However, if the reverse osmosis element operates at a high recovery rate of 60 to 80% in order to increase a flow rate of produced water, there is a problem in that a salt removal rate is decreased by about 5% in comparison with when the reverse osmosis element operates at a low recovery rate. EP 2 864 026 A1 discloses a reverse osmosis element and spacer wherein the spacer has a mesh shape comprised of a plurality of strands, said strands having a predetermined intersection point, a thickness of the spacer of 0.508-2.032 mm (20-80 mil), an angle between the intersection points of from 75-90° and a strand spacing of 2-30 SPI.

KR 2017 0112595A discloses a spacer for a reverse osmosis element with a high recovery rate even at low pressures which has a stacked tricot filtration fabric layer. The tricot filtration fabric layer has an angle of intersection of 85-95° and a thickness of 0.254-0.5588 mm (10 to 22 mil).

WO 2018/056090 A1 discloses in Example 41 a feed side channel spacer with a two-layer structure, a thickness of 0.2 mm (=8 mil) an inclination angle of 90° ,an intersection interval of 1.0 mm, a distance between fibrous materials of 0.6 mm, and a recovery ratio of 15 % and in Example 38, a feed side channel spacer with a two-layer structure with a thickness of 0.3 mm (=11.8 mil), an inclination angle of 90° an intersection interval of 2.5 mm and a distance between fibrous materials of 2.0 mm.

### [Detailed Description of the Invention]

### [Technical Problem]

The present invention has been made in an effort to solve the above-mentioned problem, and an object of the present invention is to provide the use of a reverse osmosis element with a high recovery rate, which is capable of reducing ion polarization in the reverse osmosis element by creating an effective flow of raw water at an interface of a reverse osmosis membrane of the reverse osmosis element.

The reverse osmosis spacer with a high recovery rate is capable of decreasing less a salt removal rate by increasing a flow rate of produced water when a reverse osmosis element operates at a high recovery rate of 60%.

### [Technical Solution]

A reverse osmosis spacer with a high recovery rate has a mesh shape having a plurality of strands having predetermined intersection points and operates at a recovery rate of 60%.

In addition, a thickness of the reverse osmosis spacer with a high recovery rate is 0.2032 mm (8 mil).

In addition, an angle at one side between the intersection points between the strands is 90°.

In addition, SPI (stand per Inch) of the strands is 16.

In addition, the strands form a mesh having a two-layer structure.

A reverse osmosis element with a high recovery rate used according to the present invention includes the reverse osmosis spacer with a high recovery rate.

In addition, the reverse osmosis element includes :
a tube including an opening configured to receive a permeable liquid in a longitudinal direction; one or more reverse osmosis membranes wound around the tube and
extending outward from the tube; and the reverse osmosis spacer wound around the tube and being in contact with the one or more reverse osmosis membranes.

In addition, the reverse osmosis element with a high recovery rate operates pressure of 413.69 kPa (60 psi).

In addition, the reverse osmosis element operates at raw water concentration of 20 ppm.

In addition, the reverse osmosis spacer with a high recovery rate may be stacked multiple times.

### [Advantageous Effects]

According to the present invention, it is possible to use the reverse osmosis element with a high recovery rate, which is capable of reducing ion polarization in the reverse osmosis element by creating an effective flow of raw water at the interface of the reverse osmosis membrane of the reverse osmosis element.

In addition, according to the present invention, it is possible to provide the reverse osmosis spacer with a high recovery rate, which is capable of decreasing less a salt removal rate by increasing a flow rate of produced water when the reverse osmosis element operates at a high recovery rate of 60%.

### [Brief Description of Drawings]

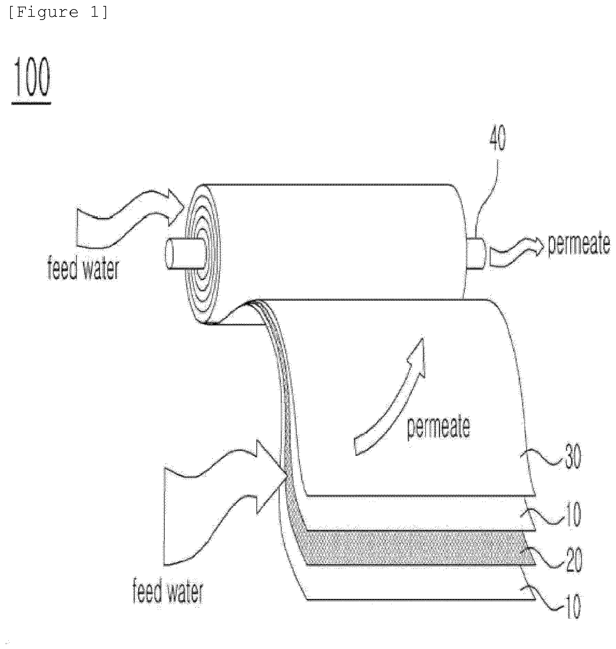

FIG. 1 is a perspective view of a reverse osmosis element 100 with a high recovery rate used in the present invention.

### [Best Mode]

Hereinafter, the present invention will be described in detail with reference to the accompanying drawings. Here, repeated descriptions and detailed descriptions of publicly-known functions and configurations, which may unnecessarily obscure the subject matter of the present invention, will be omitted. Exemplary embodiments of the present invention are provided to completely explain the present invention to a person with ordinary skill in the art. Therefore, shapes and sizes of elements illustrated in the drawings may be exaggerated for a more apparent description.

Throughout the specification, unless explicitly described to the contrary, the word "comprise" or "include" and variations, such as "comprises", "comprising", "includes" or "including", will be understood to imply the inclusion of stated constituent elements, not the exclusion of any other constituent elements.

Hereinafter, exemplary embodiments are proposed to help understand the present invention. However, the following exemplary embodiments are provided just for more easily understanding the present invention, and the contents of the present invention are not limited by the exemplary embodiments.

FIG. 1 is a perspective view of a reverse osmosis element 100 with a high recovery rate according to an exemplary embodiment of the present invention.

The reverse osmosis element 100 with a high recovery rate includes reverse osmosis membranes 10, a reverse osmosis spacer 20 with a high recovery rate, a tricot filtered water channel 30, and a tube 40.

The reverse osmosis element 100 with a high recovery rate may be configured such that the reverse osmosis membranes 10, the reverse osmosis spacer 20 with a high recovery rate, and the tricot filtered water channel 30 are stacked multiple times and surround the tube 40. The reverse osmosis spacer 20 with a high recovery rate is positioned between the reverse osmosis membranes 10 and maintains a constant interval between the reverse osmosis membranes 10. The reverse osmosis spacer 20 may serve to block a surface of the reverse osmosis membrane 10 in order to filter out contaminants contained in raw water introduced through the reverse osmosis membrane 10. Therefore, in order to enable contaminants contained in the raw water to flow without being collected, the reverse osmosis spacer 20 with a high recovery rate has a mesh shape made by a plurality of strands arranged to have predetermined intersection points. In this case, a material of the strand may be, but not particularly limited to, any one of polyethylene (PE), polyvinyl chloride (PVC), polyester, and polypropylene (PP). The mesh shape has a two-layer structure.

First, some strands are disposed in parallel at predetermined intervals in a direction inclined with respect to a flow direction of raw water. Thereafter, the remaining strands are disposed in parallel at predetermined intervals on the previous strands in a reversely inclined direction symmetrical to the inclined direction in order to form the intersection points. The mesh shape may be a parallelogrammatic shape having identical sides based on positions of the disposed strands. In this case, an angle at one side of the parallelogram with respect to the flow direction of the raw water is 70° to 90°. If the angle of the parallelogram exceeds 90°, flow resistance of the raw water increases, which may cause an increase in differential pressure. In contrast, if the angle of the parallelogram is less than 70°, the interruption of the strands is decreased, such that residual substances, which are produced when the raw water is filtered and produced water is produced, remain at the interface of the reverse osmosis membrane, and as a result, concentration of the raw water at the interface of the reverse osmosis membrane is increased, which may cause a decrease in salt removal rate.

Meanwhile, since the reverse osmosis spacer 20 with a high recovery rate has the mesh shape having the parallelogrammatic shape with the identical sides, all of the strands have the same SPI (strand per Inch). The SPI refers to the number of intersection points between the strands included in a length of 1 inch. The SPI of the strands is 16. If the SPI is smaller than 15, the ion polarization occurs, such that the raw water may not be mixed, the salt removal rate may be decreased, and a performance of the reverse osmosis element 100 may deteriorate. In contrast, if the SPI is larger than 35, there is an effect of inhibiting the ion polarization, but there may be a problem in that a pressure loss is increased in the reverse osmosis spacer 20 with a high recovery rate.

In addition, a thickness of the reverse osmosis spacer with a high recovery rate is 0.2032 mm (8 mil). If the thickness is smaller than 0.2032 mm (8 mil), the flow path may be clogged with foreign substances contained in the raw water or power required for a pump for pumping the raw water may be increased. If the thickness is larger than 0.635 mm (25 mil), the flow path is widened such that the differential pressure may be reduced, but the effect of reducing the ion polarization may deteriorate during the operation under a condition at a high recovery rate.

When the reverse osmosis spacer 20 with a high recovery rate satisfies one or more of the thickness of the strand, the angle at one side between the intersection points, and the SPI, the effect of mixing the flows of the raw water is improved, such that the ion polarization may be mitigated.

The tricot filtered water channel 30 used according to the present invention generally has a woven fabric structure and serves as a flow path having a space through which water purified by the reverse osmosis membrane 10 flows out.

The tube 40 according to the present invention is positioned at a center of the reverse osmosis element 100 with a high recovery rate and serves as a passageway through which the filtered water is introduced and discharged. To this end, voids (or openings) having predetermined sizes may be formed in an outer portion of the tube 40 so that the filtered water is introduced through the voids. In this case, the one or more voids may be formed so that the filtered water may be introduced more efficiently.

The reverse osmosis element 100 with a high recovery rate satisfies all of the thickness of the strand of the reverse osmosis spacer 20 with a high recovery rate, the angle of one side between the intersection points, and the SPI and operates at raw water concentration of 20 ppm, operating pressure of 60 psi, and a recovery rate of 60%. If the reverse osmosis element operates at a recovery rate less than 60%, a flow rate of produced water is low. If the reverse osmosis element operates at a recovery rate exceeding 80%, the amount of filtered water is increased, and the ion polarization becomes severe at the interface of the reverse osmosis membrane, such that a rate of removing salt contained in the raw water may be greatly decreased. Therefore, when the reverse osmosis element 100 with a high recovery rate operates at the high recovery rate of 60 to 80%, a flow rate of produced water may be effectively increased, a salt removal rate may be less decreased, and the amount of discarded water may be reduced.

### <Comparative Example 1>

A reverse osmosis spacer in the related art was prepared in which a thickness of the reverse osmosis spacer with a high recovery rate is 0.5588 mm (22 mil), an angle at one side between intersection points is 90°, and SPI is 16.

### <Comparative Example 2>

A reverse osmosis spacer in the related art was prepared in which a thickness of the reverse osmosis spacer with a high recovery rate is 0.4318 mm (17 mil), an angle at one side between intersection points is 90°, and SPI is 16.

### <Example 1>

A reverse osmosis spacer with a high recovery rate according to the present invention was prepared in which a thickness of the reverse osmosis spacer with a high recovery rate is 0.2032 mm (8 mil) an angle at one side between intersection points is 90°, and SPI is 16.

### <Example 2> Not falling under the scope of the claims

A reverse osmosis spacer with a high recovery rate according to the present invention was prepared in which a thickness of the reverse osmosis spacer with a high recovery rate is 0.3302 mm (13 mil) an angle at one side between intersection points is 80°, and SPI is 33.

**[Table 1] (1 mil=0.0254 mm)**

| | Thickness (mil) | Angle (°) | SPI |
|---|---|---|---|
| Comparative Example 1 | 22 | 90 | 16 |
| Comparative Example 2 | 17 | 90 | 16 |
| Example 1 | 8 | 90 | 16 |
| Example 2 | 13 | 80 | 33 |

**[Table 2] (1 GFD=1.70 LMH (Litre/m²/h)**

| | Recovery Rate (15%) | | High Recovery Rate (60%) | |
|---|---|---|---|---|
| | Salt Removal Rate (%) | Flow Rate (GFD) | Salt Removal Rate (%) | Flow Rate (GFD) |
| Comparative Example 1 | 98.6 | 21.1 | 93 | 26.9 |
| Comparative Example 2 | 98.5 | 23 | 94 | 30.4 |
| Example 1 | 98.7 | 27.8 | 94.9 | 37.1 |
| Example 2 | 98.7 | 23.6 | 94.6 | 33.5 |

These values are obtained by measuring the salt removal rate and the flow rate in the reverse osmosis element at the raw water concentration of 20 ppm and the operating pressure of 413.69 kPa (60 psi). The reverse osmosis spacers according to the examples and the comparative examples each are formed in a mesh shape. Referring to Tables 1 and 2, Comparative Examples 1 and 2 used the reverse osmosis spacers in the related art, and Example 1 used the reverse osmosis spacers with a high recovery rate according to the present invention. First, when comparing Comparative Examples 1 and 2 and Example 1, the angles at one side between the intersection points between the strands were equally 90°, the SPIs were equally 16, and the thickness of the reverse osmosis spacer with a high recovery rate was 0.5588 mm (22 mil) Comparative Example 1, 0.4318 mm (17 mil) in Comparative Example 2, and 0.2032 mm (8 mil) in Example 1. First, as a result of measuring the salt removal rate at the recovery rate of 15%, the salt removal rate was 98.6% in Comparative Example 1, 98.5% in Comparative Example 2, and 98.7% in Example 1. In addition, as a result of measuring the flow rate at the recovery rate of 15%, the flow rate was 21.1 GFD in Comparative Example 1, 23 GFD in Comparative Example 2, and 27.8 GFD in Example 1 ( 1 GFD=1.70 LMH (Litre/m2/h)). As a result of measuring the salt removal rate at the high recovery rate of 60%, the salt removal rate was 93% in Comparative Example 1, 94% in Comparative Example 2, and 94.9% in Example 1. In addition, as a result of measuring the flow rate at the high recovery rate of 60%, the flow rate was 26.9 GFD in Comparative Example 1, 30.4 GFD in Comparative Example 2, and 37.1 GFD in Example 1. ( 1 GFD=1.70 LMH (Litre/m2/h)). In Comparative Example 1, the salt removal rate was decreased by 5.6% and the flow rate was increased by 5.8 GFD under the condition of the recovery rate of 60% in comparison with the condition of the recovery rate of 15%. In Comparative Example 2, the salt removal rate was decreased by 4.5% and the flow rate was increased by 7.4 GFD under the condition of the recovery rate of 60% in comparison with the condition of the recovery rate of 15%. In Example 1, the salt removal rate was decreased by 3.8% and the flow rate was increased by 9.3 GFD under the condition of the recovery rate of 60% in comparison with the condition of the recovery rate of 15%. Therefore, it can be ascertained that as the thickness (mil) of the reverse osmosis spacer with a high recovery rate becomes smaller, the flow rate of the produced water in the reverse osmosis element may be further increased and the salt removal rate may be less decreased, compared to the related art, when the reverse osmosis element operates at the high recovery rate.

In the case of Example 2, the thickness of the reverse osmosis spacer with a high recovery rate was 0.3302 mm (13 mil) the angle at one side between the intersection points was 80°, and the SPI was 33. First, as a result of measuring the salt removal rate at the recovery rate of 15%, the salt removal rate was 98.7%, and the flow rate was 23.6 GFD. In contrast, as a result of measuring the salt removal rate at the high recovery rate of 60%, the salt removal rate was 94.6%, and the flow rate was 33.5 GFD. Therefore, in Example 2, the salt removal rate was decreased by 4.1% and the flow rate was increased by 9.9 GFD under the condition of the recovery rate of 60% in comparison with the condition of the recovery rate of 15%. Therefore, it can be ascertained that when the angle at one side between the intersection points between the strands is decreased and the SPI of the strands is increased even though the thickness of the strand is increased, the flow rate of the produced water in the reverse osmosis element may be increased, and the salt removal rate may be less decreased, compared to the related art, like Example 1.

That is, it can be ascertained that with the use of the reverse osmosis spacer with a high recovery rate according to the present invention which satisfies the condition in which the thickness of the strand is 0.2032 mm (8 mil) the angle between the intersection points is 90°, and the SPI is 16 and the use of the reverse osmosis element with a high recovery rate which satisfies the condition in which the raw water concentration is 20 ppm, the operating pressure is 60 psi, and the recovery rate is 60%, the flow rate of the produced water is maximized, and the salt removal rate is decreased less compared to the related art.

## Claims

1. Use of a reverse osmosis element (100) with a high recovery rate for salt removal,
the reverse osmosis element (100) comprising
- a reverse osmosis spacer (20) with a high recovery rate;
- a tube (40) comprising an opening configured to receive a permeable liquid in a longitudinal direction;
- one or more reverse osmosis membranes (10) wound around the tube (40) and extending outward from the tube (40) and
- the reverse osmosis spacer (20) wound around the tube and being in contact with the one or more reverse osmosis membranes (10) ;
wherein the reverse osmosis spacer (20) has a mesh shape having a plurality of strands having predetermined intersection points and forming a mesh having a two-layer structure and operates at a recovery rate of 60;
a thickness of the reverse osmosis spacer (20) is 0.2032 mm (8 mil) ;
an angle at one side between the intersection points between the strands is 90°;
the SPI (strand per Inch) of the strands is 16,
corresponding to 6.3 strands per cm;
the reverse osmosis element (100) operates at pressure of 413.685 kPa (60 psi);
wherein the reverse osmosis element (100) operates at a raw water concentration of 20 ppm, which is the concentration of both salt and contaminants in the raw water.

2. The use of a reverse osmosis (100) of claim 1, wherein the reverse osmosis spacer (20) with a high recovery rate is stacked multiple times.

## Patentansprüche

1. Verwendung eines Umkehrosmoseelements (100) mit einer hohen Rückgewinnungsrate zur Salzentfernung,
wobei das Umkehrosmoseelement (100) Folgendes umfasst:
- einen Umkehrosmose-Abstandshalter (20) mit einer hohen Rückgewinnungsrate;
- ein Rohr (40), das eine Öffnung umfasst, die konfiguriert ist, um eine durchlässige Flüssigkeit in einer Längsrichtung aufzunehmen;
- eine oder mehrere Umkehrosmosemembranen (10), die um das Rohr (40) gewickelt sind und sich von dem Rohr nach außen erstrecken; und
- den Umkehrosmose-Abstandshalter (20), der um das Rohr gewickelt ist und mit der einen oder den mehreren Umkehrosmosemembranen (10) in Kontakt steht;
wobei der Umkehrosmose-Abstandshalter (20) eine Netzform aufweist, die eine Vielzahl von Strängen aufweist, die vorbestimmte Schnittpunkte aufweisen und ein Netz bilden, das eine Zweischichtstruktur aufweist und mit einer Rückgewinnungsrate von 60 arbeitet;
eine Dicke des Umkehrosmose-Abstandshalters (20) 0,2032 mm (8 mil) beträgt;
ein Winkel an einer Seite zwischen den Schnittpunkten zwischen den Strängen 90° beträgt;
der SPI (Strang pro Zoll) der Stränge 16 beträgt, was 6,3 Strängen pro cm entspricht;
das Umkehrosmoseelement (100) bei einem Druck von 413,685 kPa (60 psi) arbeitet;
wobei das Umkehrosmoseelement (100) bei einer Rohwasserkonzentration von 20 ppm arbeitet, was die
Konzentration von sowohl Salz als auch Verunreinigungen in dem Rohwasser ist.

2. Verwendung einer Umkehrosmose (100) nach Anspruch 1, wobei der Umkehrosmose-Abstandshalter (20) mit einer hohen Rückgewinnungsrate mehrfach gestapelt ist.

## Revendications

1. Utilisation d'un élément d'osmose inverse (100) ayant un taux de récupération élevé pour l'élimination de sel,
l'élément d'osmose inverse (100) comprenant
- un espaceur d'osmose inverse (20) ayant un taux de récupération élevé ;
- un tube (40) comprenant une ouverture configurée pour recevoir un liquide perméable dans une direction longitudinale ;
- une ou plusieurs membranes d'osmose inverse (10) enroulées autour du tube (40) et s'étendant vers l'extérieur du tube ; et
- l'espaceur d'osmose inverse (20) enroulé autour du tube et étant en contact avec la ou les membranes d'osmose inverse (10) ;
dans laquelle l'espaceur d'osmose inverse (20) a une forme de maillage ayant une pluralité de brins ayant des points d'intersection prédéterminés et formant un maillage ayant une structure à deux couches et fonctionne à un taux de récupération de 60 ;
une épaisseur de l'espaceur d'osmose inverse (20) est 0,2032 mm (8 mil) ;
un angle d'un côté entre les points d'intersection entre les brins est 90° ;
le SPI (brins par pouce) des brins est 16, ce qui correspond à 6,3 brins par cm ;
l'élément d'osmose inverse (100) fonctionne à une pression de 413,685 kPa (60 psi) ;
dans laquelle l'élément d'osmose inverse (100) fonctionne à une concentration dans l'eau brute de 20 ppm, qui est la concentration à la fois du sel et des contaminants dans l'eau brute.

2. Utilisation d'une osmose inverse (100) selon la revendication 1, dans laquelle l'espaceur d'osmose inverse (20) ayant un taux de récupération élevé est empilé plusieurs fois.
